# EUROPÄISCHE PATENTSCHRIFT

(11) **EP 2 637 234 B1**
(45) Veröffentlichungstag und Bekanntmachung des Hinweises auf die Patenterteilung: **15.10.2014**
(21) Anmeldenummer: 12158445.2
(22) Anmeldetag: 07.03.2012
(51) Int. Cl.: H01M 10/613, H01M 10/655, H01M 2/10, H01M 10/625

(54) **Batterieaufbau für ein Kraftfahrzeug**
Battery structure for a motor vehicle
Structure de batterie pour un véhicule automobile

(43) Veröffentlichungstag der Anmeldung: 11.09.2013
(73) Patentinhaber: MAGNA STEYR Battery Systems GmbH & Co OG, 8141 Zettling (AT)
(72) Erfinder: Pucher, Matthias, 8052 Graz (AT); Wünsche, Ralph, 8010 Graz (AT)
(74) Vertreter: Rausch, Gabriele

(56) Entgegenhaltungen:
- EP-A1- 2 418 709
- DE-A1-102009 040 147

## Beschreibung

Die vorliegende Erfindung betrifft einen Batterieaufbau für ein Kraftfahrzeug, wie z.B.: Elektro-, Brennstoffzellen- oder Hybrid Fahrzeug, mit zumindest einem in einer Batteriegehäuseschale angeordneten Batteriemodul, das Batteriemodul aus zumindest einer elektrische Energie speichernden Batteriezelle bestehend.

Aus dem Stand der Technik ist die DE 10 2009 035 492 A2 bekannt, in welcher zumindest ein im wesentlichen plattenförmiges Element als Crashleitelement beschrieben wird, welches in wenigstens zwei gegenüberliegenden Richtungen in Richtung eines Batteriegehäuses aus einem Zellenstapel hinausragt. Das Crashleitelement ist aus einem elektrisch nicht leitenden Material, beispielsweise einem Kunststoffmaterial oder einem faserverstärkten Material ausgebildet, wobei bestimmte Stellen in dem Crashleitelement vorgesehen sind, die elektrisch leitend ausgebildet sind, welche die beiden rechts und links des Crashleitelements angeordneten Batterieeinzelzellen entsprechend den benötigten Vorgaben elektrisch verbinden.

In der DE 10 2009 040 147 A1 wird ein elektrochemischer Energiespeicher beschrieben, wobei das Gehäuse eine Wand aufweist mit einer Struktur oder mit Strukturen, in die ein Wärmeleitkörper so eingreift, dass dieser Wärmeleitkörper in Richtung der an den Berührungsflächen wirkenden Kraft nicht verschiebbar ist.
Nachteilig bei dieser Ausführung sind der zusätzlich benötigte Bauraumbedarf, sowie das zusätzliche Gewicht des Crashleitelements, auch die Herstellung der Crashleitelemente ist aufgrund der benötigten leitenden Stellen aufwendig.

Es ist eine Aufgabe der Erfindung, derartige Batterieaufbauten der genannten Art in dieser Hinsicht zu verbessern, so dass für den Crashfall auch höchste Sicherheit, bei gleichzeitig kompakter Bauweise, gewährleistet ist.

Die Lösung der Aufgabe erfolgt durch einen Batterieaufbau mit den Merkmalen des Anspruchs 1.

Erfindungsgemäß wird ein Batterieaufbau für ein Kraftfahrzeug vorgeschlagen, mit zumindest einem in einer Batteriegehäuseschale angeordneten Batteriemodul, wobei das Batteriemodul zumindest eine elektrische Energie speichernde Batteriezelle aufweist, wobei das zumindest eine Batteriemodul einen Kühlkörper aufweist, an dem die zumindest eine Batteriezelle angeordnet ist, wobei der zumindest eine Kühlkörper zwischen zwei einander gegenüberliegenden Innenflächen der Batteriegehäuseschale angeordnet ist,
wobei an einer ersten Innenseite der Batteriegehäuseschale auf Höhe der Kühlkörper zumindest ein erster Vorsprung ausgebildet ist, derart dass eine von außen auf die Batteriegehäuseschale wirkende Kraft, bei Deformation der Batteriegehäuseschale auf den zumindest einen Kühlkörper übertragbar ist, und vom Kühlkörper auf eine gegenüberliegende zweite Innenfläche der Batteriegehäuseschale übertragbar ist, wobei die Batteriegehäuseschale an einer ersten Seite des Batterieaufbaus wesentlich höher und massiver ausgebildet ist als auf der ersten gegenüberliegenden Seite, und wobei die erste Innenfläche der ersten Seite des Batterieaufbaus zugeordnet ist, und wobei der zumindest eine zweite Vorsprung eine geringere Höhe aufweist als der zumindest eine erste Vorsprung.

Eine Weiterleitung von außen wirkenden Kräften wie beispielsweise bei einem Unfall wird erfindungsgemäß dadurch erreicht, dass von einer ersten Innenfläche über einen ersten Absatz die Kräfte auf den Kühlkörper eingeleitet werden, wobei der Kühlkörper diese auf eine gegenüberliegende zweite Innenfläche überträgt.

Die Batteriegehäuseschale weist an einer ersten Seite des Batterieaufbaus eine wesentlich höhere und massivere Ausbildung auf als der ersten Seite der gegenüberliegenden Seite. Dadurch wird gewährleistet, dass auch bei einem lokalen Aufprall die Kräfte so verteilt werden, dass sie zu den Kühlkörpern geleitet, bzw. auf diese verteilt wird. Diese erste Seite des Batterieaufbaus entspricht bevorzugt jener Seite von der die Kraft wirkt, bevorzugt die Heckseite des Kraftfahrzeugs. Wird die Batterie im vorderen Bereich des Kraftfahrzeugs angeordnet, so kann die erste Seite auch der Vorderseite des Kraftfahrzeugs entsprechen. Die erste Innenfläche der Batteriegehäuseschale ist erfindungsgemäß der ersten Seite des Batterieaufbaus zugeordnet.

Durch die im Vergleich zu den ersten Vorsprüngen geringere Höhe der zweiten Vorsprünge können oberhalb der zweiten Vorsprüngen Kühlmittelverteiler mit Einlasskanälen und Auslasskanälen für den Kühlkörper vorgesehen werden. Da die in den Kühlkörper eingeleiteten Kräfte auf die zweiten Vorsprünge übertragen werden, und die zweiten Vorsprünge unterhalb der Kühlmittelverteiler angeordnet sind, bleibt der Kühlmittelverteiler unbeschädigt. Somit wird verhindert, dass bei einem Unfall Kühlmittel aus dem Kühlmittelverteiler austreten kann. Die Kühlung der Batteriemodule kann somit aufrechterhalten werden. Zudem kann ein Austritt von Kühlmittel zu Isolationsfehlern im Batterieaufbau führen. Aufgrund der erfindungsgemäßen Ausführung wird auch dieses Risiko vermieden. Die Erfindung ist besonders für Batterien in Kraftfahrzeugen geeignet, insbesondere für Elektro-, Brennstoffzellen- oder Hybrid Fahrzeuge.

Weiterbildungen der Erfindung sind in den abhängigen Ansprüchen, der Beschreibung sowie den beigefügten Zeichnungen angegeben.

In einer erfindungsgemäßen Ausführung weist die Batteriegehäuseschale an der gegenüberliegenden zweiten Innenfläche einen zumindest zweiten Vorsprung auf, wobei der zumindest eine zweite Vorsprung kleiner als der zumindest eine erste Vorsprung ausgebildet ist.
Die auf den Kühlkörper eingeleiteten Kräfte werden dabei auf den zweiten Vorsprung übertragen. Die zweiten Vorsprünge sind kleiner insbesondere mit einer geringeren Höhe als die ersten Vorsprünge ausgeführt. Die Breite der zweiten Vorsprünge ist erfindungsgemäß ähnlich zu der Breite der ersten Vorsprünge ausgeführt.

Die Batteriegehäuseschale kann aus einem beliebigen Werkstoff hergestellt sein, bevorzugt jedoch aus einem metallischen Werkstoff, aus Kunststoff, aus einem Faserverbundwerkstoff, oder einer Kombination dieser Werkstoffe. Dadurch weist die Batteriegehäuseschale eine hohe Festigkeit auf. Durch diese hohe Festigkeit wird gewährleistet, dass die bei einem Unfall eingeleiteten Kräfte sicher und zuverlässig auf die Kühlkörper übertragen werden.

Eine Realisierung hierfür kann dadurch erreicht werden, dass die Batteriegehäuseschale als Gussteil, durch Tiefziehen oder als Schweißkonstruktion mehrerer Bauteile, oder einer Kombination dieser Verfahren, ausgeführt ist.

Vorteilhaft ist, wenn zwischen dem Batteriemodul und der Batteriegehäuseschale ein umlaufender Abstand ausgebildet ist. Diese Ausführung ist besonders für den Zusammenbau des Batterieaufbaus von Vorteil. Die Batteriemodule können in der Batteriegehäuseschale befestigt werden, wodurch sie in einem definierten Abstand zueinander fixiert werden. Durch den umlaufenden Abstand ist auch nach diesem erfolgten Arbeitsschritt eine Zugänglichkeit zu den Batteriemodulen gewährleistet. Dies erleichtert beispielsweise eine nachträgliche Montage des Kühlsystems sowie die Montage elektrischer Verbindungselemente, durch welche die Batteriemodule untereinander elektrisch verbunden werden. Auch die Montage einer Überwachungselektronik und die damit verbundenen Sensoren und Leitungen ist einfach und sicher möglich. Aufgrund der festen Positionierung der Batteriemodule in der Batteriegehäuseschale wird auch eine Montageplattform geschaffen, die in einfacher Weise von einer Arbeitsstation zur nächsten transportiert werden kann. Das zumindest eine Batteriemodul ist beispielsweise mittels Schrauben durch die Unterseite der Batteriegehäuseschale befestigbar.

Die gegenüberliegende Seite des Batterieaufbaus ist an einer geeigneten Fahrzeugstruktur angeordnet. Somit kann die Kraft von einer Seite über die Kühlkörper zur gegenüberliegenden zweiten Innenfläche über den zweiten Absatz auf die Fahrzeugstruktur übertragen werden.
Dadurch werden auftretende Deformationskräfte auf die Fahrzeugstruktur ohne wesentliche Beschädigung der spannungsführenden Elemente, des Kühlsystems sowie der Steuerelektronik des Batterieaufbaus eingeleitet. Die Sicherheit des Batterieaufbaus wird dadurch wesentlich verbessert, ohne das Gewicht des Batterieaufbaus wesentlich zu erhöhen.

In einer Ausführungsform der Erfindung ist der Kühlkörper aus einem metallischen Werkstoff, beispielsweise im Strangpressprofilverfahren hergestellt. Dadurch können hohe Kräfte zuverlässig übertragen werden.

In einer weiteren Ausführungsform der Erfindung weist der Kühlkörper innenliegend Kanäle auf. Diese Kanäle erlauben das Strömen eines gasförmigen oder flüssigen Kühlmittels durch den Kühlkörper zum Abtransport der in den Batteriezellen entstehenden Wärme.

Es versteht sich erfindungsgemäß von selbst, dass die Stapelung der Batteriezellen quer oder längs zur Fahrtrichtung des Kraftfahrzeugs erfolgen kann.

Die Erfindung wird im Folgenden beispielhaft unter Bezugnahme auf die Zeichnungen beschrieben.
- Fig. 1: zeigt eine schematische Draufsicht eines erfindungsgemäßen Batterieaufbaus
- Fig. 2: ist eine Schnittansicht einer erfindungsgemäßen Batteriegehäuseschale
- Fig. 3: zeigt eine schematische Draufsicht auf ein Batteriemodul
- Fig. 4: ist eine Seitenansicht des Batteriemoduls gemäß Fig. 3

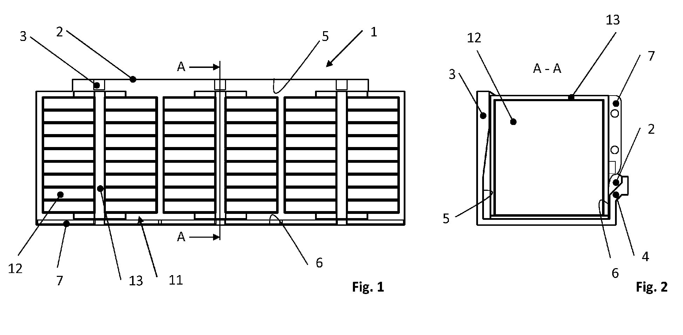

In Fig. 1 ist ein erfindungsgemäßer Batterieaufbau 1 schematisch dargestellt. Der Batterieaufbau 1 weist dabei eine Batteriegehäuseschale 2 auf, welche an einer ersten Innenfläche 5 mehrere erste Vorsprünge 3 aufweist. An der gegenüberliegenden Seite weist eine zweite Innenfläche 6 mehrere zweite Vorsprünge 4 auf. Zwischen den beiden Innenflächen 5 und 6 sind mehrere Batteriemodule 11 angeordnet, welche im wesentlichen je einen Kühlkörper 13 und eine Vielzahl von Batteriezellen 12 aufweisen. Die Batteriemodule 11 weisen zur Batteriegehäuseschale 2 einen umlaufenden Abstand auf, welcher eine einfache und leichte Montage, der Batteriekomponenten ermöglicht. Der umlaufende Abstand von der Batteriegehäuseschale 2 zu den Batteriekomponenten ist im Bereich zwischen den ersten und zweiten Vorsprüngen 3 und 4 und den Kühlkörpern 13 deutlich geringer als beispielsweise jener im Bereich der Batteriezellen 12. Bei einem Unfall ist daher nur eine geringe Deformation der Batteriegehäuseschale 2 erforderlich bis es zum Kontakt zwischen Batteriegehäuseschale 2 und Kühlkörper 13 und somit zu einer Übertragung der Deformationskräfte kommt.

Fig. 2 ist eine schematische Schnittdarstellung der Batteriegehäuseschale 2, wobei an der ersten Innenfläche 5 eine erfindungsgemäße Anordnung des ersten Vorsprungs 3, und an der zweiten Innenfläche 6 der zweite Vorsprung 4 dargestellt ist. Die Kühlmittelverteiler 7 sind an der gleichen Seite des Batterieaufbaus 1 angeordnet wie die zweite Innenfläche 6, und erstrecken sich oberhalb der zweiten Vorsprünge 4. Bei einem Unfall werden, die auf den Batterieaufbau 1 wirkenden Kräfte, von den ersten Vorsprüngen 3 über den Kühlkörper 13 auf die zweiten Vorsprünge 4 übertragen. Aufgrund der Freistellung der Kühlmittelverteiler 7 zur Batteriegehäuseschale 2 werden diese dabei nicht beschädigt.

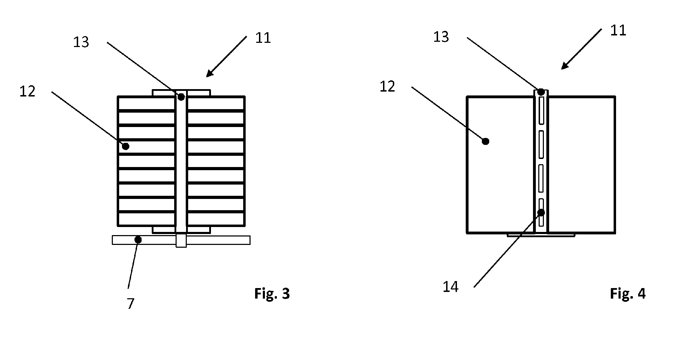

In Fig. 3 ist eine schematische Draufsicht auf ein Batteriemodul 11 dargestellt, wobei dieses im wesentlichen aus einem Kühlkörper 13 und einer Vielzahl von am Kühlkörper 13 angeordneten Batteriezellen 12 besteht. Darüber hinaus kann das Batteriemodul 11 zusätzliche Komponenten aufweisen, beispielsweise elektrische Verbindungselemente, welche die Batteriezellen 12 in geeigneter Weise elektrisch miteinander verbinden, sowie weiter Mittel zum Halten und Befestigen dieser Verbindungselemente. Das Batteriemodul 11 kann auch Mittel zur Überwachung der elektrischen Spannung oder Temperatur der Batteriezellen 12 aufweisen, sowie eine oder mehrere Elektronikeinheiten zur Steuerung und Überwachung des Batteriemoduls 11. Zur besseren Übersicht sind diese Komponenten jedoch nicht dargestellt.

Fig. 4 zeigt eine schematische Seitenansicht des Batteriemoduls 11, wobei der Kühlkörper 13 eine Vielzahl von innenliegenden Kanälen 14 zum Kühlen der Batteriezellen 12 aufweist.

### Bezugszeichenliste

- 1: Batterieaufbau
- 2: Batteriegehäuseschale
- 3: erster Vorsprung
- 4: zweiter Vorsprung
- 5: erste Innenfläche
- 6: zweite Innenfläche
- 7: Kühlmittelverteiler
- 11: Batteriemodul
- 12: Batteriezelle
- 13: Kühlkörper
- 14: Kanäle

## Patentansprüche

1. Batterieaufbau (1) für ein Kraftfahrzeug, mit zumindest einem in einer Batteriegehäuseschale (2) angeordneten Batteriemodul (11), wobei das Batteriemodul (11) zumindest eine elektrische Energie speichernden Batteriezelle (12) aufweist, **dadurch gekennzeichnet, dass** das zumindest eine Batteriemodul (11) einen Kühlkörper (13) aufweist, an dem die zumindest eine Batteriezelle (12) angeordnet ist, wobei der zumindest eine Kühlkörper (13) zwischen zwei einander gegenüberliegenden Innenflächen (5, 6) der Batteriegehäuseschale (2) angeordnet ist, wobei an einer ersten Innenfläche (5) der Batteriegehäuseschale (2) auf Höhe der Kühlkörper (13) zumindest ein erster Vorsprung (3) ausgebildet ist, derart dass eine von außen auf die Batteriegehäuseschale (2) wirkende Kraft, bei Deformation der Batteriegehäuseschale (2) auf den zumindest einen Kühlkörper (13) übertragbar ist, und vom Kühlkörper (13) auf eine gegenüberliegende zweite Innenfläche (6) der Batteriegehäuseschale (2) übertragbar ist, wobei die Batteriegehäuseschale (2) an einer ersten Seite des Batterieaufbaus (1) wesentlich höher und massiver ausgebildet ist als auf der ersten gegenüberliegenden Seite, und wobei die erste Innenfläche (5) der ersten Seite des Batterieaufbaus (1) zugeordnet ist, und wobei der zumindest eine zweite Vorsprung (4) eine geringere Höhe aufweist als der zumindest eine erste Vorsprung (3).

2. Batterieaufbau (1) für ein Kraftfahrzeug nach Anspruch 1,
**dadurch gekennzeichnet, dass** an der gegenüberliegenden zweiten Innenfläche (6) der Batteriegehäuseschale (2) der zumindest zweite Vorsprung (4) angeordnet ist.

3. Batterieaufbau (1) für ein Kraftfahrzeug nach Anspruch 1,
**dadurch gekennzeichnet, dass** der zumindest eine zweite Vorsprung (4) kleiner ausgeführt ist, als der zumindest eine erste Vorsprung (3).

4. Batterieaufbau (1) für ein Kraftfahrzeug nach Anspruch 1,
**dadurch gekennzeichnet, dass** die Batteriegehäuseschale (2) aus einem beliebigen Werkstoff, bevorzugt metallisch, aus Kunststoff, Faserverbundwerkstoff, oder einer Kombination dieser Werkstoffe, hergestellt ist.

5. Batterieaufbau (1) für ein Kraftfahrzeug nach Anspruch 5,
**dadurch gekennzeichnet, dass** die Batteriegehäuseschale (2) als Gussteil, durch Tiefziehen oder als Schweißkonstruktion mehrerer Bauteile, oder einer Kombination dieser Verfahren, ausgeführt sein kann.

6. Batterieaufbau (1) für ein Kraftfahrzeug nach Anspruch 1,
**dadurch gekennzeichnet, dass** zwischen dem zumindest einem Batteriemodul (11) und der Batteriegehäuseschale (2) ein umlaufender Abstand ausgebildet ist.

7. Batterieaufbau (1) für ein Kraftfahrzeug nach Anspruch 1,
**dadurch gekennzeichnet, dass** die gegenüberliegende Seite des Batterieaufbaus (1)einer geeigneten Fahrzeugstruktur angeordnet ist.

8. Batterieaufbau (1) für ein Kraftfahrzeug nach Anspruch 1,
**dadurch gekennzeichnet, dass** der zumindest eine Kühlkörper (13) aus einem metallischen Werkstoff, beispielsweise im Strangpressprofilverfahren hergestellt ist.

9. Batterieaufbau (1) für ein Kraftfahrzeug nach Anspruch 10,
**dadurch gekennzeichnet, dass** der zumindest eine Kühlkörper (13) innenliegende Kanäle (14) aufweist.

10. Batterieaufbau (1) für ein Kraftfahrzeug nach Anspruch 11,
**dadurch gekennzeichnet, dass** die innenliegenden Kanäle (14) des zumindest einen Kühlkörpers (13) über zumindest einen Kühlmittelverteiler (7) von einem gasförmigen oder flüssigen Kühlmittel durchströmbar sind.

## Claims

1. Battery structure (1) for a motor vehicle, with at least one battery module (11) arranged in a battery housing shell (2), wherein the battery module (11) has at least one battery cell (12) storing electrical energy, **characterized in that** the at least one battery module (11) has a heat sink (13) on which the at least one battery cell (12) is arranged, wherein the at least one heat sink (13) is arranged between two mutually opposite inner surfaces (5, 6) of the battery housing shell (2), wherein at least one first projection (3) is formed on a first inner surface (5) of the battery housing shell (2) level with the heat sink (13) in such a manner that, when the battery housing shell (2) is deformed, a force acting on the battery housing shell (2) from the outside can be transmitted to the at least one heat sink (13) and can be transmitted from the heat sink (13) to an opposite, second inner surface (6) of the battery housing shell (2), wherein the battery housing shell (2) is of substantially higher and more solid design on a first side of the battery structure (1) than on the first opposite side, and wherein the first inner surface (5) is assigned to the first side of the battery structure (1), and wherein the at least one second projection (4) has a lower height than the at least one first projection (3).

2. Battery structure (1) for a motor vehicle according to Claim 1, **characterized in that** the at least one second projection (4) is arranged on the opposite, second inner surface (6) of the battery housing shell (2).

3. Battery structure (1) for a motor vehicle according to Claim 1, **characterized in that** the at least one second projection (4) is of smaller design than the at least one first projection (3).

4. Battery structure (1) for a motor vehicle according to Claim 1, **characterized in that** the battery housing shell (2) is produced from any material, preferably metal material, from plastic or a fibre composite material, or from a combination of said materials.

5. Battery structure (1) for a motor vehicle according to Claim 1, **characterized in that** the battery housing shell (2) can be formed as a cast part, by deep drawing or as a welded structure of a plurality of components, or a combination of said methods.

6. Battery structure (1) for a motor vehicle according to Claim 1, **characterized in that** an encircling distance is formed between the at least one battery module (11) and the battery housing shell (2).

7. Battery structure (1) for a motor vehicle according to Claim 1, **characterized in that** the opposite side of the battery structure (1) is arranged on a suitable vehicle structure.

8. Battery structure (1) for a motor vehicle according to Claim 1, **characterized in that** the at least one heat sink (13) is produced from a metal material, for example by the extruded profile method.

9. Battery structure (1) for a motor vehicle according to Claim 1, **characterized in that** the at least one heat sink (13) has internal channels (14).

10. Battery structure (1) for a motor vehicle according to Claim 9, **characterized in that** a gaseous or liquid coolant can flow through the internal channels (14) of the at least one heat sink (13) via at least one coolant distributor (7).

## Revendications

1. Structure de batterie (1) pour un véhicule automobile, avec au moins un module de batterie (11) disposé dans un coffre de boîtier de batterie (2), dans laquelle le module de batterie (11) comporte au moins une cellule de batterie (12) accumulant de l'énergie électrique, **caractérisée en ce que** ledit au moins un module de batterie (11) présente un corps de refroidissement (13), sur lequel ladite au moins une cellule de batterie (12) est disposée, dans laquelle ledit au moins un corps de refroidissement (13) est disposé entre deux faces intérieures opposées l'une à l'autre (5, 6) du coffre de boîtier de batterie (2), dans laquelle au moins une première saillie (3) est formée sur une première face intérieure (5) du coffre de boîtier de batterie (2) à hauteur des corps de refroidissement (13), de telle manière qu'une force agissant de l'extérieur sur le coffre de boîtier de batterie (2) puisse, par déformation du coffre de boîtier de batterie (2), être transmise audit au moins un corps de refroidissement (13), et puisse être transmise du corps de refroidissement (13) à une deuxième face intérieure opposée (6) du coffre de boîtier de batterie (2), dans laquelle le coffre de boîtier de batterie (2) est sensiblement plus haut et plus massif sur un premier côté de la structure de batterie (1) que sur le premier côté opposé, et dans laquelle la première face intérieure (5) est associée au premier côté de la structure de batterie (1), et dans laquelle ladite au moins une deuxième saillie (4) présente une hauteur moindre que ladite au moins une première saillie (3).

2. Structure de batterie (1) pour un véhicule automobile selon la revendication 1, **caractérisée en ce que** ladite au moins une deuxième saillie (4) est disposée sur la deuxième face intérieure opposée (6) du coffre de boîtier de batterie (2).

3. Structure de batterie (1) pour un véhicule automobile selon la revendication 1, **caractérisée en ce que** ladite au moins une deuxième saillie (4) est plus petite que ladite au moins une première saillie (3).

4. Structure de batterie (1) pour un véhicule automobile selon la revendication 1, **caractérisée en ce que** le coffre de boîtier de batterie (2) est fabriqué en un matériau quelconque, de préférence métallique, en matière plastique, en matériau composite en fibres, ou en une combinaison de ces matériaux.

5. Structure de batterie (1) pour un véhicule automobile selon la revendication 1, **caractérisée en ce que** le coffre de boîtier de batterie (2) peut être produit sous la forme d'une pièce moulée, par emboutissage profond ou sous la forme d'une construction soudée de plusieurs composants, ou par une combinaison de ces procédés.

6. Structure de batterie (1) pour un véhicule automobile selon la revendication 1, **caractérisée en ce qu'**un écartement périphérique est réalisé entre ledit au moins module de batterie (11) et le coffre de boîtier de batterie (2).

7. Structure de batterie (1) pour un véhicule automobile selon la revendication 1, **caractérisée en ce que** le côté opposé de la structure de batterie (1) est disposé sur une structure de véhicule appropriée.

8. Structure de batterie (1) pour un véhicule automobile selon la revendication 1, **caractérisée en ce que** ledit au moins un corps de refroidissement (13) est fabriqué en un matériau métallique, par exemple par un procédé de profilage par extrusion.

9. Structure de batterie (1) pour un véhicule automobile selon la revendication 1, **caractérisée en ce que** ledit au moins un corps de refroidissement (13) présente des canaux internes (14).

10. Structure de batterie (1) pour un véhicule automobile selon la revendication 9, **caractérisée en ce que** les canaux internes (14) dudit au moins un corps de refroidissement (13) peuvent être parcourus par un fluide de refroidissement gazeux ou liquide au moyen d'au moins un distributeur de fluide de refroidissement (7).
